# EUROPÄISCHE PATENTSCHRIFT

(11) **EP 3 659 825 B1**
(45) Veröffentlichungstag und Bekanntmachung des Hinweises auf die Patenterteilung: **01.09.2021**
(21) Anmeldenummer: 19201617.8
(22) Anmeldetag: 07.10.2019
(51) Int. Cl.: B60C 11/12

(54) **FAHRZEUGLUFTREIFEN**
PNEUMATIC TYRE
PNEUMATIQUE

(30) Priorität: 30.11.2018 DE 102018220704
(43) Veröffentlichungstag der Anmeldung: 03.06.2020
(73) Patentinhaber: Continental Reifen Deutschland GmbH, 30165 Hannover (DE)
(72) Erfinder: Schlittenhard, Jan, 30165 Hannover (DE); Bosse, Stefan, 30165 Hannover (DE); Henze, Eugen, 30165 Hannover (DE)
(74) Vertreter: Continental Corporation

(56) Entgegenhaltungen:
- WO-A1-2018/185436
- DE-A1-102010 000 272
- DE-A1-102014 203 546
- US-A1- 2012 180 920

## Beschreibung

Die Erfindung betrifft einen Fahrzeugluftreifen mit einem Laufstreifen mit durch Rillen, beispielsweise Umfangsrillen und/oder Querrillen, voneinander getrennten Profilelementen, wie beispielsweise Profilblöcken oder Profilbändern, welche jeweils mit einer Vielzahl von sich parallel zueinander sowie zur axialen Richtung unter einem Winkel von bis zu 45° erstreckenden Einschnitten mit einer konstanten Breite und jeweils zwei Einschnittwänden versehen sind, wobei jeder Einschnitt zumindest einen über den Großteil seiner Erstreckung auf maximale Einschnitttiefe ausgeführten Hauptabschnitt und zumindest einen an diesen anschließenden, gegenüber dem Hauptabschnitt über seine gesamte Erstreckung seichter ausgeführten Randabschnitt aufweist, wobei im Hauptabschnitt an der einen Einschnittwand zumindest ein Vorsprung ausgebildet ist, welchem auf der anderen Einschnittwand eine mit dem Vorsprung korrespondierende Vertiefung gegenüberliegt, wobei der Vorsprung und die Vertiefung in Erstreckungsrichtung des Einschnittes langgestreckt sind und daher in der Erstreckungsrichtung eine Länge und in radialer Richtung eine Breite aufweisen.

Ein derartiger gattungsbildender Fahrzeugluftreifen ist beispielsweise aus der DE 10 2010 000 272 A1 bekannt. Im radial äußeren Bereich der einen Einschnittwand sind erste Vorsprünge ausgebildet, welche eine abgeflachte Seite aufweisen, die eine zur radialen Richtung orientierte Stützfläche bildet, wobei die Länge der Vorsprünge 1,5 mm bis 3,5 mm und die Breite der Vorsprünge 1,0 mm bis 3,0 mm beträgt. Die Stützflächen der ersten Vorsprünge sollen eine abstützende Wirkung bei in Querrichtung wirkenden Kräften zeigen. Im radial inneren Bereich der Einschnittwand sind zweite Vorsprünge ausgebildet, welche eine abgeflachte Seite aufweisen, die parallel zur Laufstreifenperipherie orientiert ist, wobei die Länge der Vorsprünge 3,0 mm bis 7,0 mm und die Breite der Vorsprünge 1,0 mm bis 3,0 mm beträgt. Die zweiten Vorsprünge begrenzen bei fortschreitendem Laufstreifenabrieb die Beweglichkeit der Profilelemente in Umfangsrichtung. Durch derart gestaltete Vorsprünge soll der Laufstreifenabrieb vergleichmäßigt werden. Vorsprünge und korrespondiere Vertiefungen sind sowohl im Hauptabschnitt also auch in den eine geringere Tiefe aufweisenden Randabschnitten vorgesehen.

Ferner ist aus der DE 10 2014 203 546 A1 ein Fahrzeugluftreifen mit einen Laufstreifen mit Profilpositiven bekannt, in welchen in axialer Richtung verlaufende Einschnitte ausgebildet sind, wobei im Einschnittinneren zumindest eine der Einschnittwände eine Vertiefung aufweist, welche das Wasseraufnahmevermögen des Einschnitts erhöht. Die Vertiefung ist radial innerhalb einer Tiefe von 50% der Profiltiefe ausgebildet und randseitig von mindestens 2 mm Einschnittwand umlaufen.

Korrespondiere Vorsprünge und Vertiefungen an Einschnittwänden tragen zur Steifigkeit der Profilblöcke und dazu bei, bestimmte Fahreigenschaften des Reifens, beispielsweise die Traktionseigenschaften auf schneebedeckter Fahrbahn, zu verbessern. Da die Einschnitte sehr schmal sind (übliche Breite 0,4 mm bis 0, 8mm) ist das Entformungsverhalten, also das Herausziehen der die Einschnitte ausformenden Lamellen aus dem vulkanisierten Laufstreifen, bei den bisher bekannten, mit Vorsprüngen und Vertiefungen versehenen "dreidimensionalen" Einschnitten besonders problematisch, sodass die Möglichkeit besteht, dass die Einschnitte bzw. der Laufstreifen im Bereich der Einschnitte nicht in tadellosem Zustand ausgeformt werden. Insbesondere können im Bereich der Einschnittkanten Einrisse oder Abblätterungen des Laufstreifengummis auftreten. Ferner kann es vorkommen, dass die ausgebildeten Vorsprünge an den korrespondierenden, an der Lamelle befindlichen Einbuchtungen "anhaften" und beim Entfernen der Lamelle von der Einschnittwand abgerissen werden.

Der Erfindung liegt daher die Aufgabe zugrunde, die Einschnitte im Laufstreifen eines Fahrzeugluftreifens der eingangs genannten Art in einer Weise zu gestalten, die das Entstehen von Einrissen und Abblätterungen vermeidet, wobei die vorteilhaften Wirkungen von korrespondierend ausgeführten Vorsprünge und Vertiefungen an den Einschnittwänden, etwa was die Steifigkeit der Profilelemente und die Fahreigenschaften des Reifens unter winterlichen Fahrbedingungen betrifft, erhalten bleiben bzw. sogar verbessert sein sollen.

Gelöst wird die gestellte Aufgabe erfindungsgemäß dadurch, dass die Länge des Vorsprunges und der Vertiefung mindestens 50% der in Erstreckungsrichtung des Einschnittes ermittelten Länge des Hauptabschnittes beträgt und dass die Einschnittwände im einzigen bzw. in jedem Randabschnitt unstrukturiert sind.

Erfindungsgemäße gestaltete Einschnitte weisen daher ausschließlich in dem auf maximale Einschnitttiefe ausgeführten Hauptabschnitt korrespondierende Vorsprünge und Vertiefungen an den Einschnittwänden auf Die Vorsprünge und Vertiefungen sind gegenüber den bekannten Vorsprüngen und Vertiefungen deutlich länger ausgeführt, wobei ihre Länge auf die Länge des auf maximale Einschnitttiefe ausgeführten Hauptabschnittes des Einschnittes abgestimmt ist. Dadurch sind die Lamellen, welche die Vorsprünge ausbilden, derart entformbar, dass keinerlei Einrisse und Abblätterungen auftreten. In den im Hinblick auf das Entformungsverhalten besonders kritischen Randabschnitten der Einschnitte sind die Einschnittwände hingegen unstrukturiert, also frei von Vorsprüngen, welche vom Niveau der Einschnittwand abragen, sowie frei von Vertiefungen. Die Gefahr des Auftretens von Fehlstellen in den beim Entformen der Lamellen meist kritischen Randbereichen der Einschnitte ist bedingt durch die unstrukturierten Randabschnitte äußerst gering.

Weitere bevorzugte Maßnahme und Merkmale sind für optimale Fahreigenschaften des Reifens unter winterlichen Fahrbedingungen sowie ein tadelloses Entformen des Reifens aus der Vulkanisationsform besonders vorteilhaft, wie nachfolgend dargelegt wird.

Bei einer diesbezüglich vorteilhaften Ausführung beträgt die Breite des Vorsprunges bzw. der Vertiefung 20% bis 40% der Einschnitttiefe.

Bei einer weiteren diesbezüglich vorteilhaften Ausführung, ist im Hauptabschnitt bzw. in jedem Hauptabschnitt eines Einschnittes an der einen Einschnittwand genau ein Vorsprung und an der anderen Einschnittwand genau eine Vertiefung ausgebildet.

In obigem Zusammenhang ist es ferner günstig, wenn die Länge des Vorsprunges und der Vertiefung bis zu 95% der Länge des Hauptabschnittes beträgt. Dadurch weist der Vorsprung und die Vertiefung zu den Rändern der Einschnittwand einen gewissen Abstand auf.

Weitere Maßnahmen bzw. Merkmale sind vor allem für die Stabilität der Einschnittwände von Vorteil. Diesbezüglich ist es günstig, wenn der Vorsprung und die Vertiefung, bei Sicht auf die jeweilige Einschnittwand, bezüglich einer senkrecht auf die Einschnittwand stehenden, in horizontaler Richtung verlaufenden Längsschnitt-Mittelebene symmetrisch sind und wenn insbesondere auch der Vorsprung und die Vertiefung, bei Sicht auf die jeweilige Einschnittwand, bezüglich einer senkrecht auf die Einschnittwand stehenden, in radialer Richtung verlaufenden Querschnitt-Mittelebene symmetrisch sind. Diese symmetrischen Ausgestaltungen tragen daher zu einer optimalen Entformbarkeit des Reifens bei.

Die Steifigkeit der Profilelemente wird auf eine für die Traktionseigenschaften des Reifens auf schneebedeckter Fahrbahn besonders vorteilhaften Weise verbessert, wenn der Vorsprung gegenüber dem Niveau der Einschnittwand eine Höhe von 90% bis 350%, insbesondere von 130% bis 200%, und besonders bevorzugter Weise von bis zu 150% der Breite des Einschnittes aufweist.

Ferner ist es bevorzugt, wenn sich der Vorsprung aus einem langgestreckten, mittleren Vorsprungteil und zwei jeweils an dessen Längsenden anschließenden Vorsprungteilen zusammensetzt, wobei der mittlere Vorsprungteil durch eine im Querschnitt U-förmige Oberfläche begrenzt ist, insbesondere durch eine Oberfläche begrenzt ist, welche ein Teilbereich einer Mantelfläche eines Kreiszylinders ist. Derartige Vorsprünge und Vertiefungen weisen eine im Hinblick auf das Entformungsverhalten besonders vorteilhafte Geometrie auf und sind besonders stabil.

Diesbezüglich ist es ferner vorteilhaft, wenn sich der mittlere Vorsprungteil über zumindest 50%, vorzugsweise über zumindest 75%, der Länge des Vorsprunges erstreckt.

Gemäß einer weiteren bevorzugten Ausführungsvariante sind die seitlichen Vorsprungteile jeweils durch eine halb-kuppelartige Oberfläche, insbesondere durch eine Oberfläche, welche ein Teilbereich einer Oberfläche einer Kugel ist, begrenzt. Durch diese Maßnahme sind die mitunter etwas heikler zu entformenden "Randbereiche" der Vorsprünge und Vertiefungen weitgehend "spannungsfrei" entformbar.

Die Entformbarkeit ist weiter verbessert, wenn der Vorsprung und die Vertiefung zu den Rändern der Einschnittwände einen Abstand von mindestens 0,5 mm, insbesondere von mindestens 1,0 mm, und besonders bevorzugt von mindestens 2,0 mm aufweisen.

Die nachfolgenden bevorzugten Maßnahmen tragen vor allem zu guten Traktionseigenschaften auf schneebedeckter Fahrbahn, bei. Die Maßnahmen befassen sich mit speziellen Abstimmungen der Länge und der Position der Vorsprünge und korrespondierenden Vertiefungen mit der sonstigen Einschnittausgestaltung.

Bei einer dieser Maßnahmen beträgt bei Einschnitten, welche einen einzigen Randabschnitt aufweisen, die Länge des Vorsprunges und der Vertiefung mindestens 60% der Länge des Hauptabschnittes.

Bei einer weiteren diesbezüglichen Maßnahme beträgt bei Einschnitten, welche zwei Randabschnitte aufweisen, die Länge des Vorsprunges und der Vertiefung mindestens 80% der Länge des Hauptabschnittes.

Bei einer noch weiteren diesbezüglichen Maßnahme verläuft im Hauptabschnitt ein Einschnittgrundabschnitt, an welchen eine zu dem Randabschnitt verlaufende Flanke anschließt bzw. an welchen zu den Randabschnitten verlaufende Flanken anschließen, wobei die bzw. zumindest eine Flanke zur radialen Richtung unter einem Winkel von 0° bis 10° verläuft und wobei der Vorsprung und die Vertiefung in den Bereich radial außerhalb dieser Flanke nicht hineinragen. Besonders vorteilhaft ist auch die Maßnahme, dass im Hauptabschnitt ein Einschnittgrundabschnitt verläuft, an welchen eine zu dem Randabschnitt verlaufende Flanke anschließt bzw. an welchen zu den Randabschnitten verlaufende Flanken anschließen, wobei die bzw. zumindest eine Flanke zur radialen Richtung unter einem Winkel, welcher größer 10° ist und höchstens 45° beträgt, verläuft, wobei der Vorsprung und die Vertiefung in den Bereich radial außerhalb dieser Flanke hineinragen.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Ansicht auf Profilblöcke eines Laufstreifens eines Fahrzeugluftreifens,
Fig. 1a einen Schnitt entlang der Linie Ia-Ia der Fig. 1,
Fig. 1b eine Draufsicht auf eine Einschnittwand eines Einschnittes mit einer ersten Ausführungsvariante der Erfindung,
Fig. 1c einen Schnitt entlang der Linie Ic-Ic der Fig. 1b,
Fig. 2 bis Fig. 7 Draufsichten auf Einschnittwände mit weiteren Ausführungsvarianten der Erfindung.

Die Erfindung befasst sich mit der Ausgestaltung von Einschnitten in Laufstreifen von Fahrzeugluftreifen in Radialbauart, insbesondere für Personenkraftwagen, Vans oder Light-Trucks, wobei die Fahrzeugluftreifen für ein Fahren unter winterlichen Fahrbedingungen besonders gut geeignet sind.

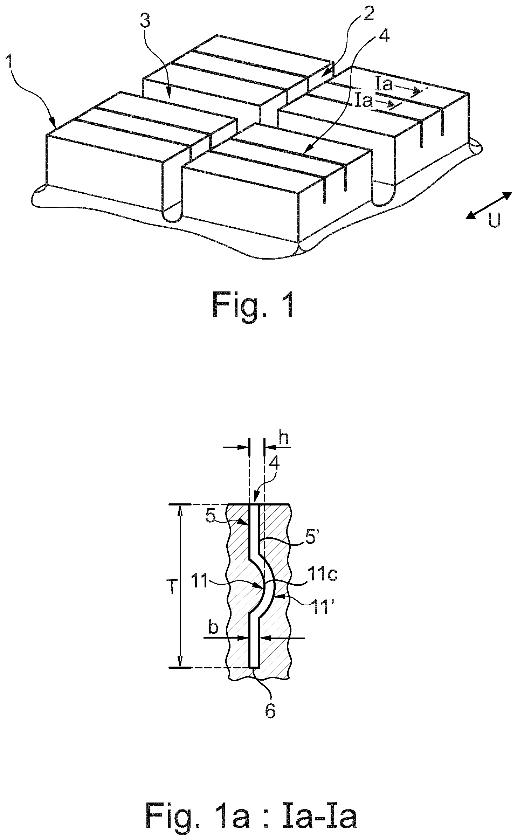

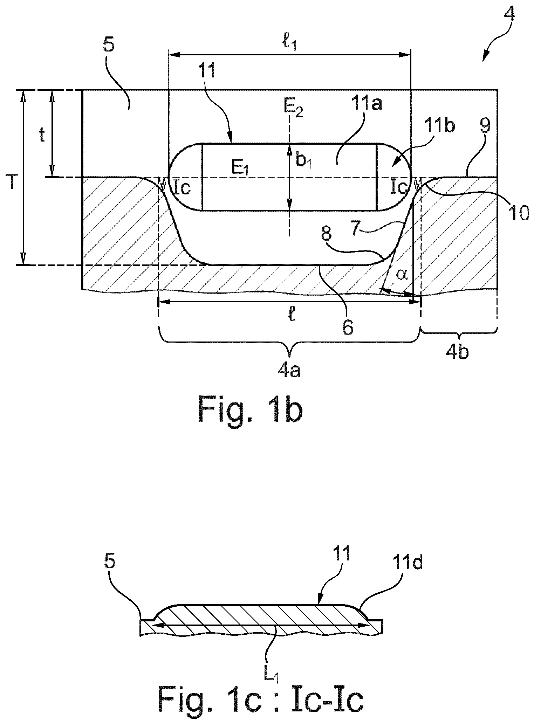

Fig. 1 zeigt vier Profilblöcke 1, welche zu zwei im mittleren Laufstreifenbereich nebeneinander verlaufenden Blockreihen gehören, die durch eine beim gezeigten Ausführungsbeispiel gerade verlaufende Umfangsrille 2 voneinander getrennt sind, wobei weitere, nicht bezeichnete Umfangsrillen die Blockreihen außen begrenzen. Der Doppelpfeil U kennzeichnet die Umfangrichtung des Reifens.

Die Umfangsrille 2 weist in radialer Richtung die für den jeweiligen Fahrzeugluftreifen vorgesehene Profiltiefe auf, welche insbesondere 6,5 mm bis 9,0 mm beträgt. Innerhalb der Blockreihen sind in Umfangsrichtung benachbarte Profilblöcke 1 jeweils durch eine Querrille 3 voneinander getrennt, welche beim gezeigten Ausführungsbeispiel eine mit der Umfangsrille 2 übereinstimmende Tiefe aufweist.

Jeder Profilblock 1 ist mit zwei übereinstimmend ausgeführten Einschnitten 4 versehen, welche innerhalb jedes Profilblockes 1 gleichmäßig verteilt angeordnet sind, sich in Draufsicht gerade sowie in Querrichtung und daher parallel zueinander erstrecken und den jeweiligen Profilblock 1 durchqueren. Wie Fig. 1a zeigt, weist jeder Einschnitt 4 zwei einander gegenüberliegende Einschnittwände 5, 5', eine konstante Breite b von insbesondere 0,4 mm bis 0,8 mm sowie in radialer Richtung eine maximale Einschnitttiefe T von 65% bis 100%, insbesondere von 75% bis 90%, der Profiltiefe auf.

Fig. 1b zeigt einen entlang eines Einschnittes 4 geöffneten bzw. aufgeschnittenen Profilblock 1 und daher eine Ansicht der einen, einen Einschnitt 4 begrenzenden Einschnittwand 5. Die zweite, der Einschnittwand 5 gegenüberliegende Einschnittwand 5' ist im Wesentlichen als Negativ der Einschnittwand 5 ausgeführt (siehe Fig. 1a). Der Einschnitt 4 setzt sich aus einem zentralen Hauptabschnitt 4a und zwei angehobenen, seitlichen Randabschnitten 4b zusammen. Der zentrale Hauptabschnitt 4a ist in radialer Richtung durch einen Einschnittgrundabschnitt 6 und zwei, jeweils an einem der Enden des Einschnittgrundabschnittes 6 anschließenden Flanken 7 begrenzt, wobei zwischen dem Einschnittgrundabschnitt 6 und den Flanken 7 jeweils eine Übergangsrundung 8 ausgebildet ist. Die Flanken 7 verlaufen, bei Sicht auf die Einschnittwand 5 betrachtet, zur radialen Richtung unter einem Winkel a, welcher größer als 10° ist und höchstens 45° beträgt und welcher beim gezeigten Ausführungsbeispiel 20° beträgt. Jeder seitliche Randabschnitt 4b ist in radialer Richtung durch einen Einschnittgrundabschnitt 9 begrenzt, welcher in einer in radialer Richtung ermittelten Tiefe t von 30% bis 50% der Einschnitttiefe T verläuft und über eine Übergangsrundung 10 knickfrei in die jeweilige Flanke 7 übergeht. Bei der "Teilung" des Einschnittes 4 in den Hauptabschnitt 4a und die Randabschnitte 4b sind die Übergangsrundungen 10 nicht berücksichtigt. Der Hauptabschnitt 4a weist in Erstreckungsrichtung des Einschnittes 4 sowie ohne Berücksichtigung der Übergangsrundungen 10 eine Länge 1 auf, welche beim gezeigten Ausführungsbeispiel zirka 12,0 mm beträgt.

Wie Fig. 1b in Verbindung mit Fig. 1a und Fig. 1c zeigt, ist auf der Einschnittwand 5 im Hauptabschnitt 4a des Einschnittes 4 ein vom Niveau der Einschnittwand 5 abragender Vorsprung 11 ausgebildet, welcher in eine an der Einschnittwand 5' ausbildete korrespondiere wannenartige Vertiefung 11' (Fig. 1a) hineinragt, wobei der Einschnitt 4 zwischen dem Vorsprung 11 und der Vertiefung 11' die bereits erwähnte konstante Breite b aufweist. Der Vorsprung 11 weist gegenüber dem Niveau der Einschnittwand 5 eine Höhe h (Fig. 1a) von 90% bis 350%, insbesondere von 130% bis 200%, vorzugsweise von bis zu 150% der Breite b des Einschnittes 4 auf.

Gemäß Fig. 1b sind der Vorsprung 11 und die Vertiefung 11', bei Sicht auf die Einschnittwand 5 bzw. 5' betrachtet, in Erstreckungsrichtung des Einschnittes 4 langgestreckt, beim gezeigten Ausführungsbeispiel bedingt durch die Ausrichtung der Einschnitte 4 in axialer Richtung langgestreckt und enden im Bereich radial außerhalb der Flanken 7. Ferner sind der Vorsprung 11 und die Vertiefung 11' bei Sicht auf die jeweilige Einschnittwand 5, 5' bezüglich einer senkrecht auf die Einschnittwand 5, 5' stehenden, in horizontaler Richtung verlaufenden Längsschnitt-Mittelebene Ei (fällt mit der Schnittlinie Ic-Ic zusammen) und bezüglich einer senkrecht auf die Einschnittwand 5,5' stehenden, in radialer Richtung verlaufenden Querschnitt-Mittelebene E₂ symmetrisch ausgeführt. Die Längsschnitt-Mittelebene Ei und die Querschnitt-Mittelebene E₂ verlaufen daher orthogonal zueinander. Der Vorsprung 11 und die Vertiefung 11' weisen entlang der Längsschnitt-Mittelebene Ei eine Länge l₁ auf, welche beim gezeigten Ausführungsbeispiel zirka 90% der Länge 1 des Hauptabschnittes 4a beträgt. Ferner weisen der Vorsprung 11 und die Vertiefung 11' entlang der Querschnitt-Mittelebene E₂ eine Breite bi auf, welche 20% bis 40% der Einschnitttiefe T beträgt. Die Längsschnitt-Mittelebene Ei befindet sich beim gezeigten Ausführungsbeispiel in der bereits erwähnten Tiefe t des Einschnittgrundabschnittes 9 der Randabschnitte 4b.

Der Vorsprung 11 setzt sich aus einem in der Erstreckungsrichtung des Einschnittes 4 langgestreckten, bei Sicht auf die Einschnittwand 5 rechteckigen mittleren Vorsprungteil 11a und zwei bei Sicht auf die Einschnittwand 5 halbkreisförmigen Vorsprungteilen 11b zusammen. Die halbkreisförmigen Vorsprungteile 11b schließen jeweils an eine der Längsenden des Vorsprungteiles 11a an, wobei die Kreissehnen der Halbkreise an den mittleren Vorsprungteil 11a angrenzen. Der mittlere Vorsprungteil 11a erstreckt sich über zumindest 50%, vorzugsweise über zumindest 75%, der Länge l₁ des Vorsprunges 11 und ist durch eine im Querschnitt U-förmige Oberfläche 11c (Fig. 1a) begrenzt, welche beim gezeigten Ausführungsbeispiel ein Teilbereich einer Mantelfläche eines Kreiszylinders ist (Fig. 1a bis Fig. 1c). Die Vorsprungteile 11b sind jeweils durch eine halb-kuppelartige Oberfläche 11d (Fig. 1c) begrenzt, welche insbesondere ein Teilbereich einer Kugeloberfläche ist (Fig. 1b, Fig. 1c).

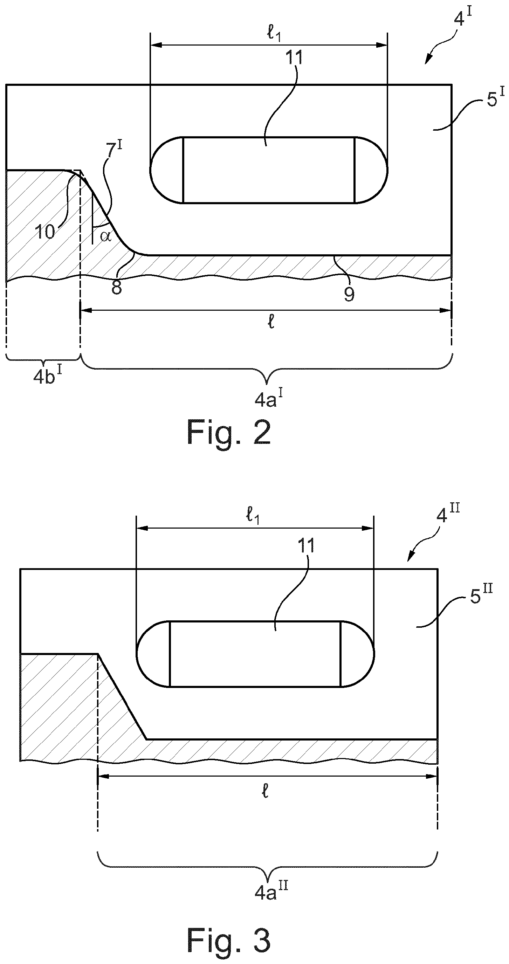

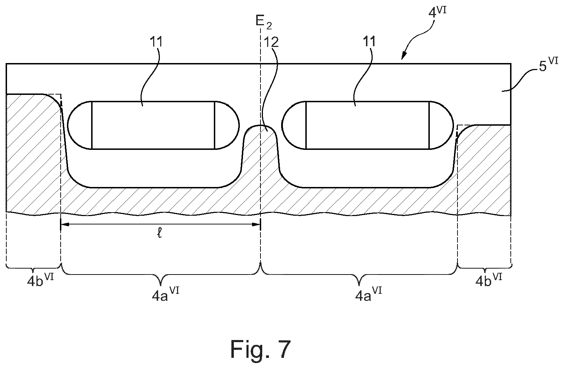

Fig. 2 bis Fig. Fig. 7 zeigen Draufsichten auf Einschnittwände 5¹ bis 5^{VI}, welche Einschnitte 4^{I} bis 4^{VI} mitbegrenzen, wobei die Einschnitte 4^{I} bis 4^{VI} Varianten des Einschnittes 4 sind. Die Einschnittwände 5^{I} bis 5^{V} sind jeweils mit einem Vorsprung 11, die Einschnittwand 5^{VI} ist mit zwei Vorsprüngen 11 versehen, wobei den Vorsprüngen 11 an den nicht gezeigten Einschnittwänden eine korrespondiere Vertiefung gegenüberliegt. Die jeweils zum Einschnitt 4 übereinstimmend ausgeführten Bereiche bzw. Abschnitte der Einschnitte 4^{I} bis 4^{VI} sind nachfolgend nicht mehr beschrieben oder mit denselben Bezugsziffern wie der Einschnitt 4 versehen. Die Länge der Hauptabschnitte der Einschnitte 4^{I} bis 4^{VI} ist jeweils mit 1 bezeichnet.

Wie Fig. 2 zeigt, setzt sich der Einschnitt 4^{I} aus einem Hauptabschnitt 4a^{I} und einem einzigen Randabschnitt 4b zusammen. Der Vorsprung 11 befindet sich komplett innerhalb des Hauptabschnittes 4a^{I}, seine Länge l₁ beträgt zirka 65% der Länge 1 des Hauptabschnittes 4a^{I}. An den Einschnittgrundabschnitt 9 schließt eine Flanke 7^{I} an, welche zur radialen Richtung unter einem Winkel α von etwa 30° verläuft.

Die Variante gemäß Fig. 3 (Einschnitt 4^{II}) entspricht jener gemäß Fig. 2, jedoch ohne Übergangsrundungen 8, 10 (Fig. 2). Die Länge l₁ des Vorsprunges 11 beträgt etwa 65% der Länge l des Hauptabschnittes 4a^{II}.

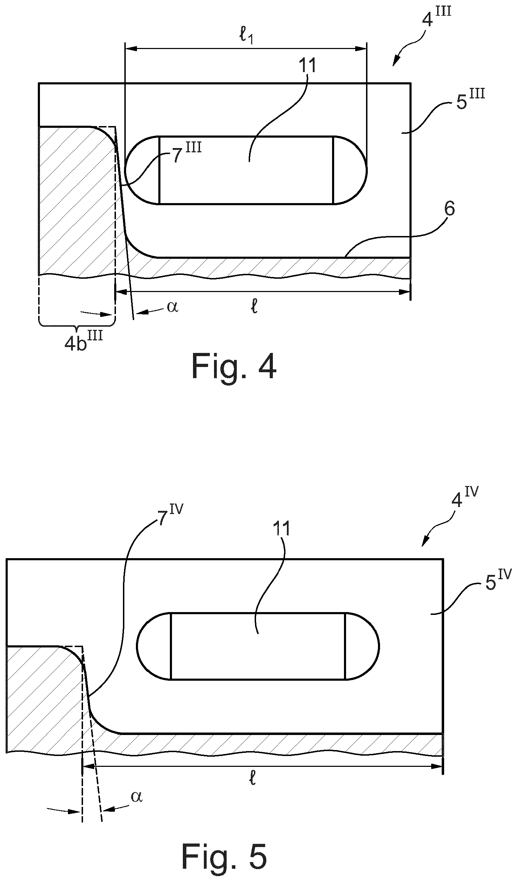

Die in Fig. 4 dargestellte Variante (Einschnitt 4^{III}) entspricht weitgehend jener gemäß Fig. 2, wobei ein Randabschnitt 4b^{III} vorgesehen ist, welcher gegenüber dem Randabschnitt 4b (Fig. 2) in radialer Richtung stärker angehoben ist und wobei der Winkel α der anschließenden, zum Einschnittgrundabschnitt 6 verlaufenden Flanke 7^{III} 0° bis 10° beträgt. Die Länge l₁ des Vorsprunges 11 beträgt etwa 80% der Länge 1.

Fig. 5 zeigt eine Variante (Einschnitt 4^{IV}), welche sich von jener gemäß Fig. 2 insbesondere dadurch unterscheidet, dass die einzige vorgesehene Flanke 7^{IV} zur radialen Richtung unter einem Winkel α von 0° bis 10° verläuft.

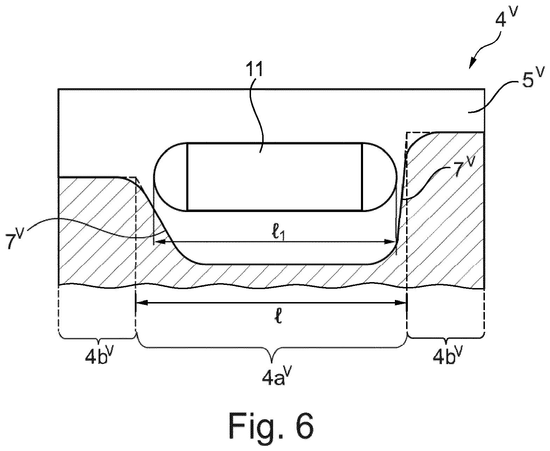

Der in Fig. 6 gezeigte Einschnitt 4^{V} weist einen Hauptabschnitt 4a^{V} und zwei Randabschnitte 4b^{V} auf, wobei der in Fig. 6 linke Randabschnitt 4b^{V} in radialer Richtung tiefer ausgeführt ist als der in Fig. 6 rechte Randabschnitt 4b^{V} und wobei die zu den Randabschnitten 4b^{V} verlaufenden Flanken 7^{V} zur radialen Richtung unter verschieden großen Winkeln verlaufen.

Fig. 7 zeigt einen Einschnitt 4^{VI}, welcher zwei auf Einschnitttiefe t ausgeführte Hauptabschnitte 4a^{VI} und zwei Randabschnitte 4b^{VI} aufweist. Die Hauptabschnitte 4a^{VI} sind bezüglich einer Querschnitt-Mittelebene E₂ des Einschnittes 4^{VI} symmetrisch ausgeführt.

Die Tiefe des einen Randabschnittes 4b^{VI} weicht von jener des anderen Randabschnittes 4b^{VI} ab. Zwischen den Hauptabschnitten 4a^{VI} ist eine Grundanhebung 12, und in jedem Hauptabschnitt 4^{VI}a ist ein Vorsprung 11 ausgebildet. Die Grundanhebung 12 reicht in radialer Richtung etwa bis zur Mitte der Vorsprünge 11.

Bei sämtlichen Varianten ist es bevorzugt, wenn die Vorsprünge 11 und die korrespondierenden Vertiefungen 11' zu den Rändern der Einschnittwände 5, 5', 5^{I} bis 5^{VI} einen Mindestabstand von mindestens 0,5 mm, insbesondere von mindestens 1,0 mm, und besonders bevorzugt von mindestens 2,0 mm aufweisen. Die Vorsprünge 11 und die korrespondierenden Vertiefungen 11' sind daher von mindestens 0,5 mm, insbesondere von mindestens 1,0 mm, und besonders bevorzugt von mindestens 2,0 mm Einschnittwand umlaufen.

Die Erfindung ist nur durch die angefügten Ansprüche beschränkt und nicht durch die beschriebenen Ausführungsvarianten.

Die Vorsprünge und korrespondierenden Vertiefungen müssen nicht symmetrisch ausgeführt sein. Die Einschnitte können in Draufsicht zumindest abschnittsweise wellen-, zickzackförmig oder dergleichen verlaufen, wobei bei solchen Einschnitten die Vorsprünge und korrespondierenden Vertiefungen über die "Zacken" bzw. "Wellen" des Einschnittes bzw. der Einschnittwand verlaufen können. Die Einschnitte können sich zur axialen Richtung unter einem Winkel von 0° bis 45° erstrecken und auch in anderen Profilelementen, wie beispielsweise Profilbändern oder dergleichen, vorgesehen sein. Innerhalb eines Profilelementes verlaufen die Einschnitte in bekannter Weise zumindest in Gruppen parallel zueinander.

### Bezugsziffernliste

- 1.............................: Profilblock
- 2.............................: Umfangsrille
- 3.............................: Querrille
- 4,4^{I} bis 4^{VI}.............: Einschnitt
- 4a, 4a^{I}, 4a^{II} , 4a^{VI} .....: Hauptabschnitt
- 4b, 4b^{III}, 4b^{V} ...........: Randabschnitt
- 5, 5', 5^{I} bis 5^{VI} ........: Einschnittwand
- 6.............................: Einschnittgrundabschnitt
- 7,7^{I}, 7^{III}, 7^{V}, 7^{IV}......: Flanke
- 8.............................: Übergangsrundung
- 9.............................: Einschnittgrundabschnitt
- 10...........................: Übergangsrundung
- 11...........................: Vorsprung
- 11a.........................: mittlerer Vorsprungteil
- 11b.........................: Vorsprungteil
- 11c.........................: Oberfläche
- 11d.........................: Oberfläche
- 11'..........................: Vertiefung
- 12...........................: Grundanhebung
- b, b₁........................: Breite
- E₁ ...........................: Längsschnitt-Mittelebene
- E₂ ...........................: Querschnitt-Mittelebene
- h.............................: Höhe
- l, l₁..........................: Länge
- T.............................: Einschnittttiefe
- t..............................: Tiefe
- U ............................: Doppelpfeil (Umfangsrichtung)
- α.............................: Winkel

## Patentansprüche

1. Fahrzeugluftreifen mit einem Laufstreifen mit durch Rillen (2, 3), beispielsweise Umfangsrillen (2) und/oder Querrillen (3), voneinander getrennten Profilelementen (1), wie beispielsweise Profilblöcken (1) oder Profilbändern, welche jeweils mit einer Vielzahl von sich parallel zueinander sowie zur axialen Richtung unter einem Winkel von bis zu 45° erstreckenden Einschnitten (4,4^{I} bis 4^{VI}) mit einer konstanten Breite (b) und jeweils zwei Einschnittwänden (5, 5^{I} bis 5^{VI}, 5') versehen sind, wobei jeder Einschnitt (4, 4^{I} bis 4^{VI}) zumindest einen über den Großteil seiner Erstreckung auf maximale Einschnitttiefe (T) ausgeführten Hauptabschnitt (4a, 4a^{I}, 4a^{II}, 4a^{VI}) und zumindest einen an diesen anschließenden, gegenüber dem Hauptabschnitt (4a, 4a^{I}, 4a^{II}, 4a^{VI}) über seine gesamte Erstreckung seichter ausgeführten Randabschnitt (4b, 4b^{III}, 4b^{V}) aufweist, wobei im Hauptabschnitt (4a, 4a^{I}, 4a^{II}, 4a^{VI}) an der einen Einschnittwand (5, 5^{I} bis 5^{VI}) zumindest ein Vorsprung (11) ausgebildet ist, welchem auf der anderen Einschnittwand (5') eine mit dem Vorsprung (11) korrespondierende Vertiefung (11') gegenüberliegt, wobei der Vorsprung (11) und die Vertiefung (11') in Erstreckungsrichtung des Einschnittes (4) langgestreckt sind und daher in der Erstreckungsrichtung eine Länge (l₁) und in radialer Richtung eine Breite (bi) aufweisen,
**dadurch gekennzeichnet,**
**dass** die Länge (l₁) des Vorsprunges (11) und der Vertiefung (11') mindestens 50% der in Erstreckungsrichtung des Einschnittes (4, 4^{I} bis 4^{VI}) ermittelten Länge (1) des Hauptabschnittes (4a, 4a^{I}, 4a^{II}, 4a^{VI}) beträgt und
**dass** die Einschnittwände (5, 5^{I} bis 5^{VI}, 5') im einzigen bzw. in jedem Randabschnitt (4b, 4b^{III}, 4b^{V}) unstrukturiert sind.

2. Fahrzeugluftreifen nach Anspruch 1, **dadurch gekennzeichnet, dass** die Breite (bi) des Vorsprunges (11) bzw. der Vertiefung (11') 20% bis 40% der Einschnitttiefe (T) beträgt.

3. Fahrzeugluftreifen nach Anspruch 1 oder 2, **dadurch gekennzeichnet, dass** im Hauptabschnitt (4a, 4a^{I}, 4a^{VI}) bzw. in jedem Hauptabschnitt (4a^{VI}) eines Einschnittes (4a, 4a^{I}, 4a^{VI}) an der einen Einschnittwand (5, 5^{I} bis 5^{VI}) genau ein Vorsprung (11) und an der anderen Einschnittwand (5') genau eine Vertiefung (11') ausgebildet ist.

4. Fahrzeugluftreifen nach einem der Ansprüche 1 bis 3, **dadurch gekennzeichnet, dass** die Länge (l₁) des Vorsprunges (11) und der Vertiefung (11') bis zu 95% der Länge (1) des Hauptabschnittes (4a, 4a^{I}, 4a^{VI}) beträgt.

5. Fahrzeugluftreifen nach einem der Ansprüche 1 bis 4, **dadurch gekennzeichnet, dass** der Vorsprung (11) und die Vertiefung (11'), bei Sicht auf die jeweilige Einschnittwand (5, 5'), bezüglich einer senkrecht auf die Einschnittwand (5, 5') stehenden, in horizontaler Richtung verlaufenden Längsschnitt-Mittelebene (E₁) symmetrisch sind.

6. Fahrzeugluftreifen nach einem der Ansprüche 1 bis 5, **dadurch gekennzeichnet, dass** der Vorsprung (11) und die Vertiefung (11'), bei Sicht auf die jeweilige Einschnittwand (5, 5'), bezüglich einer senkrecht auf die Einschnittwand (5, 5') stehenden, in radialer Richtung verlaufenden Querschnitt-Mittelebene (E₂) symmetrisch sind.

7. Fahrzeugluftreifen nach einem der Ansprüche 1 bis 6, **dadurch gekennzeichnet, dass** der Vorsprung (11) gegenüber dem Niveau der Einschnittwand (5) eine Höhe (h) von 90% bis 350%, insbesondere von 130% bis 200%, und besonders bevorzugter Weise von bis zu 150% der Breite (b) des Einschnittes (4, 4^{I} bis 4^{VI}) aufweist.

8. Fahrzeugluftreifen nach einem der Ansprüche 1 bis 7, **dadurch gekennzeichnet, dass** sich der Vorsprung (11) aus einem langgestreckten, mittleren Vorsprungteil (11a) und zwei jeweils an dessen Längsenden anschließenden Vorsprungteilen (11b) zusammensetzt, wobei der mittlere Vorsprungteil (11a) durch eine im Querschnitt U-förmige Oberfläche (11c) begrenzt ist, insbesondere durch eine Oberfläche (11c) begrenzt ist, welche ein Teilbereich einer Mantelfläche eines Kreiszylinders ist.

9. Fahrzeugluftreifen nach Anspruch 8, **dadurch gekennzeichnet, dass** sich der mittlere Vorsprungteil (11a) über zumindest 50%, vorzugsweise über zumindest 75%, der Länge (l₁) des Vorsprunges (11) erstreckt.

10. Fahrzeugluftreifen nach Anspruch 8 oder 9, **dadurch gekennzeichnet, dass** die seitlichen Vorsprungteile (11b) jeweils durch eine halb-kuppelartige Oberfläche (11d) begrenzt sind, insbesondere durch eine Oberfläche (11d) begrenzt sind, welche ein Teilbereich einer Oberfläche einer Kugel ist.

11. Fahrzeugluftreifen nach einem der Ansprüche 1 bis 10, **dadurch gekennzeichnet, dass** der Vorsprung (11) und die Vertiefung (11') zu den Rändern der Einschnittwände (5, 5^{I} bis 5^{VI}) einen Abstand von mindestens 0,5 mm, insbesondere von mindestens 1,0 mm, und besonders bevorzugt von mindestens 2,0 mm aufweisen.

12. Fahrzeugluftreifen nach einem der Ansprüche 1 bis 11, **dadurch gekennzeichnet, dass** bei Einschnitten (4^{I} bis 4^{IV}), welche einen einzigen Randabschnitt (4b^{I}, 4b^{III}) aufweisen, die Länge (l₁) des Vorsprunges (11) und der Vertiefung (11') mindestens 60% der Länge (1) des Hauptabschnittes (4a^{I}, 4a^{II}) beträgt.

13. Fahrzeugluftreifen nach einem der Ansprüche 1 bis 12, **dadurch gekennzeichnet, dass** bei Einschnitten (4, 4^{V}, 4^{VI}), welche zwei Randabschnitte (4b, 4b^{V}, 4b^{VI}) aufweisen, die Länge (l₁) des Vorsprunges (11) und der Vertiefung (11') mindestens 80% der Länge (1) des Hauptabschnittes (4a, 4a^{V}, 4a^{VI}) beträgt.

14. Fahrzeugluftreifen nach einem der Ansprüche 1 bis 13, **dadurch gekennzeichnet, dass** im Hauptabschnitt (4a^{V}, 4a^{VI}) ein Einschnittgrundabschnitt (6) verläuft, an welchen eine zu dem Randabschnitt (4b^{III}, 4b^{V}, 4b^{VI}) verlaufende Flanke (7^{III}, 7^{IV}, 7^{V}) anschließt bzw. an welchen zu den Randabschnitten (4b^{III}, 4b^{V}, 4b^{VI}) verlaufende Flanken (7^{III}, 7^{IV}, 7^{V}) anschließen, wobei die bzw. zumindest eine Flanke (7^{III}, 7^{IV}, 7^{V}) zur radialen Richtung unter einem Winkel (α) von 0° bis 10° verläuft und wobei der Vorsprung (11) und die Vertiefung (11') in den Bereich radial außerhalb dieser Flanke (7^{III}, 7^{IV}) nicht hineinragen.

15. Fahrzeugluftreifen nach einem der Ansprüche 1 bis 14, **dadurch gekennzeichnet, dass** im Hauptabschnitt (4a, 4a^{II}, 4a^{V}) ein Einschnittgrundabschnitt (6) verläuft, an welchen eine zu dem Randabschnitt (4b^{V}) verlaufende Flanke (7^{V}) anschließt bzw. an welchen zu den Randabschnitten (4b) verlaufende Flanken (7) anschließen, wobei die bzw. zumindest eine Flanke (7, 7^{V}) zur radialen Richtung unter einem Winkel (a), welcher größer 10° ist und höchstens 45° beträgt, verläuft und wobei der Vorsprung (11) und die Vertiefung (11') in den Bereich radial außerhalb dieser Flanke (7, 7^{V}) hineinragen.

## Claims

1. Pneumatic vehicle tyre having a tread with profile elements (1), such as profile blocks (1) or profile bands, which are separated from one another by channels (2, 3), for example circumferential channels (2) and/or transverse channels (3), and which are each provided with a multiplicity of sipes (4, 4^{I} to 4^{VI}), which sipes extend parallel to one another and at an angle of up to 45° with respect to the axial direction and have a constant width (b) and in each case two sipe walls (5, 5^{I} to 5^{VI}, 5'), wherein each sipe (4, 4^{I} to 4^{VI}) has at least one main section (4, 4a^{I}, 4a^{II}, 4a^{VI}) , which is formed with a maximum sipe depth (T) over the major part of its extent, and at least one edge section (4b, 4b^{III}, 4b^{V}) which adjoins said main section and which is formed so as to be shallower than the main section (4a, 4a^{I}, 4a^{II}, 4a^{VI}) over its entire extent, wherein, in the main section (4a, 4a^{I}, 4a^{II}, 4a^{VI}) , on one sipe wall (5, 5^{I} to 5^{VI}), there is formed at least one projection (11), opposite which, on the other sipe wall (5'), there is situated a depression (11') corresponding to the projection (11), wherein the projection (11) and the depression (11') are elongate in an extent direction of the sipe (4) and therefore have a length (l₁) in the extent direction and a width (b₁) in a radial direction,
**characterized**
**in that** the length (l₁) of the projection (11) and of the depression (11') amounts to at least 50% of the length (1) of the main section (4a, 4a^{I}, 4a^{II}, 4a^{VI}) as measured in the extent direction of the sipe (4, 4^{I} to 4^{VI}), and
**in that** the sipe walls (5, 5^{I} to 5^{VI}, 5') are non-structured in the single or in each edge section (4b, 4b^{III}, 4b^{V}).

2. Pneumatic vehicle tyre according to Claim 1, **characterized in that** the width (b₁) of the projection (11) and of the depression (11') amounts to 20% to 40% of the sipe depth (T).

3. Pneumatic vehicle tyre according to Claim 1 or 2, **characterized in that**, in the main section (4a, 4a^{I}, 4a^{VI}) or in each main section (4a^{VI}) of a sipe (4, 4^{I}, 4^{VI}), exactly one projection (11) is formed on one sipe wall (5, 5^{I} to 5^{VI}) and exactly one depression (11') is formed on the other sipe wall (5').

4. Pneumatic vehicle tyre according to any one of Claims 1 to 3, **characterized in that** the length (l₁) of the projection (11) and of the depression (11') amounts to up to 95% of the length (1) of the main section (4a, 4a^{I}, 4a^{VI}).

5. Pneumatic vehicle tyre according to any one of Claims 1 to 4, **characterized in that**, in a view directed onto the respective sipe wall (5, 5'), the projection (11) and the depression (11') are symmetrical with respect to a longitudinal section central plane (E₁) which is perpendicular to the sipe wall (5, 5') and which runs in a horizontal direction.

6. Pneumatic vehicle tyre according to any one of Claims 1 to 5, **characterized in that**, in a view directed onto the respective sipe wall (5, 5'), the projection (11) and the depression (11') are symmetrical with respect to a transverse section central plane (E₂) which is perpendicular to the sipe wall (5, 5') and which runs in a radial direction.

7. Pneumatic vehicle tyre according to any one of Claims 1 to 6, **characterized in that** the projection (11) has, relative to the level of the sipe wall (5), a height (h) of 90% to 350%, in particular of 130% to 200%, and particularly preferably of up to 150%, of the width (b) of the sipe (4, 4^{I} to 4^{VI}).

8. Pneumatic vehicle tyre according to any one of Claims 1 to 7, **characterized in that** the projection (11) is made up of an elongate central projection part (11a) and two projection parts (11b) adjoining the longitudinal ends of said central projection part, wherein the central projection part (11a) is delimited by a surface (11c) which is U-shaped in cross section, in particular delimited by a surface (11c) which is a subregion of a lateral surface of a circular cylinder.

9. Pneumatic vehicle tyre according to Claim 8, **characterized in that** the central projection part (11a) extends over at least 50%, preferably over at least 75%, of the length (l₁) of the projection (11).

10. Pneumatic vehicle tyre according to Claim 8 or 9, **characterized in that** the lateral projection parts (11b) are in each case delimited by a semi-dome-shaped surface (11d), in particular delimited by a surface (11d) which is a subregion of a surface of a sphere.

11. Pneumatic vehicle tyre according to any one of Claims 1 to 10, **characterized in that** the projection (11) and the depression (11') have a spacing of at least 0.5 mm, in particular of at least 1.0 mm, and particularly preferably of at least 2.0 mm, to the edges of the sipe walls (5, 5^{I} to 5^{VI}).

12. Pneumatic vehicle tyre according to any one of Claims 1 to 11, **characterized in that**, in the case of sipes (4^{I} to 4^{IV}) which have a single edge section (4b^{I}, 4b^{III}), the length (l₁) of the projection (11) and of the depression (11') amounts to at least 60% of the length (1) of the main section (4a^{I}, 4a^{II}).

13. Pneumatic vehicle tyre according to any one of Claims 1 to 12, **characterized in that**, in the case of sipes (4, 4^{V}, 4^{VI}) which have two edge sections (4b, 4b^{V}, 4b^{VI}), the length (l₁) of the projection (11) and of the depression (11') amounts to at least 80% of the length (1) of the main section (4a, 4a^{V}, 4a^{VI}) .

14. Pneumatic vehicle tyre according to any one of Claims 1 to 13, **characterized in that** a sipe base section (6) runs in the main section (4a^{V}, 4a^{VI}), which sipe base section is adjoined by a flank (7^{III} , 7^{IV}, 7^{V}) which runs to the edge section (4b^{III}, 4b^{V}, 4b^{VI}), or which sipe base section is adjoined by flanks (7^{III}, 7^{IV}, 7^{V}) which run to the edge sections (4b^{III}, 4b^{V}, 4b^{VI}), wherein the or at least one flank (7^{III}, 7^{IV}, 7^{V}) runs at an angle (α) of 0° to 10° with respect to the radial direction, and wherein the projection (11) and the depression (11') do not project into the region radially outside said flank (7^{III}, 7^{IV}).

15. Pneumatic vehicle tyre according to any one of Claims 1 to 14, **characterized in that** a sipe base section (6) runs in the main section (4a, 4a^{II}, 4a^{V}), which sipe base section is adjoined by a flank (7^{V}) which runs to the edge section (4b^{V}), or which sipe base section is adjoined by flanks (7) which run to the edge section (4b), wherein the or at least one flank (7, 7^{V}) runs at an angle (α) of greater than 10° and at most 45° with respect to the radial direction, and wherein the projection (11) and the depression (11') project into the region radially outside said flank (7, 7^{V}).

## Revendications

1. Pneumatique de véhicule muni d'une bande de roulement munie d'éléments profilés (1) séparés les uns des autres par des rainures (2, 3), par exemple des rainures circonférentielles (2) et/ou des rainures transversales (3), tels que par exemple des blocs profilés (1) ou des bandes profilées, qui sont chacun munis d'une pluralité d'entailles (4, 4^{I} à 4^{VI}) s'étendant parallèlement les unes aux autres, ainsi qu'à un angle de jusqu'à 45° par rapport à la direction axiale, ayant une largeur constante (b) et chacune deux parois d'entaille (5, 5^{I} à 5^{VI}, 5'), chaque entaille (4, 4^{I} à 4^{VI}) comprenant au moins une section principale (4a, 4a^{I}, 4a^{II}, 4a^{VI}) réalisée sur la majeure partie de son étendue à une profondeur d'entaille maximale (T) et au moins une section de bord (4b, 4b^{III}, 4b^{V}), attenante à celle-ci, réalisée moins profondément que la section principale (4a, 4a^{I}, 4a^{II}, 4a^{VI}) sur son étendue totale, au moins une saillie (11) étant formée dans la section principale (4a, 4a^{I}, 4a^{II}, 4a^{VI}) sur la paroi d'entaille (5, 5^{I} à 5^{VI}), qui est opposée à un creux (11') correspondant à la saillie (11) sur l'autre paroi d'entaille (5'), la saillie (11) et le creux (11') étant allongés dans la direction d'étendue de l'entaille (4) et présentant par conséquent dans la direction d'étendue une longueur (l₁) et dans la direction radiale une largeur (b₁),
**caractérisé en ce que**
la longueur (l₁) de la saillie (11) et du creux (11') est d'au moins 50 % de la longueur (1) de la section principale (4a, 4a^{I}, 4a^{II}, 4a^{VI}) déterminée dans la direction d'étendue de l'entaille (4, 4^{I} à 4^{VI}), et
**en ce que** les parois d'entaille (5, 5^{I} à 5^{VI}, 5') sont non structurées dans la section de bord unique ou dans chaque section de bord (4b, 4b^{III}, 4b^{V}).

2. Pneumatique de véhicule selon la revendication 1, **caractérisé en ce que** la largeur (b₁) de la saillie (11) ou du creux (11') est de 20 % à 40 % de la profondeur d'entaille (T).

3. Pneumatique de véhicule selon la revendication 1 ou 2, **caractérisé en ce qu'**exactement une saillie (11) est formée sur la paroi d'entaille (5, 5^{I} à 5^{VI}) et exactement un creux (11') est formé sur l'autre paroi d'entaille (5') dans la section principale (4a, 4a^{I}, 4a^{VI}) ou dans chaque section principale (4a^{VI}) d'une entaille (4a, 4a^{I}, 4a^{VI}).

4. Pneumatique de véhicule selon l'une quelconque des revendications 1 à 3, **caractérisé en ce que** la longueur (l₁) de la saillie (11) et du creux (11') est de jusqu'à 95 % de la longueur (1) de la section principale (4a, 4a^{I}, 4a^{VI}).

5. Pneumatique de véhicule selon l'une quelconque des revendications 1 à 4, **caractérisé en ce qu'**en regardant la paroi d'entaille respective (5, 5'), la saillie (11) et le creux (11') sont symétriques par rapport à un plan médian de coupe longitudinale (E₁), perpendiculaire à la paroi d'entaille (5, 5'), s'étendant dans la direction horizontale.

6. Pneumatique de véhicule selon l'une quelconque des revendications 1 à 5, **caractérisé en ce qu'**en regardant la paroi d'entaille respective (5, 5'), la saillie (11) et le creux (11') sont symétriques par rapport à un plan médian de coupe transversale (E₂), perpendiculaire à la paroi d'entaille (5, 5'), s'étendant dans la direction radiale.

7. Pneumatique de véhicule selon l'une quelconque des revendications 1 à 6, **caractérisé en ce que** la saillie (11) présente, par rapport au niveau de la paroi d'entaille (5), une hauteur (h) de 90 % à 350 %, notamment de 130 % à 200 %, et de manière particulièrement préférée de jusqu'à 150 % de la largeur (b) de l'entaille (4, 4^{I} à 4^{VI}).

8. Pneumatique de véhicule selon l'une quelconque des revendications 1 à 7, **caractérisé en ce que** la saillie (11) se compose d'une partie de saillie centrale allongée (11a) et de deux parties de saillie (11b), chacune attenante à ses extrémités longitudinales, la partie de saillie centrale (11a) étant délimitée par une surface (11c) en forme de U dans la coupe transversale, notamment étant délimitée par une surface (11c) qui est une zone partielle d'une surface d'enveloppe d'un cylindre circulaire.

9. Pneumatique de véhicule selon la revendication 8, **caractérisé en ce que** la partie de saillie centrale (11a) s'étend sur au moins 50 %, de préférence sur au moins 75 %, de la longueur (l₁) de la saillie (11) .

10. Pneumatique de véhicule selon la revendication 8 ou 9, **caractérisé en ce que** les parties de saillie latérales (11b) sont chacune délimitées par une surface (11d) en forme de demi-coupole, notamment sont délimitées par une surface (11d) qui est une zone partielle d'une surface d'une sphère.

11. Pneumatique de véhicule selon l'une quelconque des revendications 1 à 10, **caractérisé en ce que** la saillie (11) et le creux (11') présentent un écart par rapport aux bords des parois d'entaille (5, 5^{I} à 5^{VI}) d'au moins 0,5 mm, notamment d'au moins 1,0 mm, et de manière particulièrement préférée d'au moins 2,0 mm.

12. Pneumatique de véhicule selon l'une quelconque des revendications 1 à 11, **caractérisé en ce que** pour les entailles (4^{I} à 4^{IV}) qui présentent une section de bord unique (4b^{I}, 4b^{III}), la longueur (l₁) de la saillie (11) et du creux (11') est d'au moins 60 % de la longueur (l) de la section principale (4a^{I}, 4a^{II}).

13. Pneumatique de véhicule selon l'une quelconque des revendications 1 à 12, **caractérisé en ce que** pour les entailles (4, 4^{V}, 4^{VI}) qui comprennent deux sections de bord (4b, 4b^{V}, 4b^{VI}), la longueur (l₁) de la saillie (11) et du creux (11') est d'au moins 80 % de la longueur (1) de la section principale (4a, 4a^{V}, 4a^{VI}).

14. Pneumatique de véhicule selon l'une quelconque des revendications 1 à 13, **caractérisé en ce qu'**une section de base d'entaille (6) s'étend dans la section principale (4a^{V}, 4a^{VI}), à laquelle un flanc (7^{III}, 7^{IV}, 7^{V}) s'étendant vers la section de bord (4b^{III}, 4b^{V}, 4b^{VI}) est attenant ou à laquelle des flancs (7^{III}, 7^{IV}, 7^{V}) s'étendant vers les sections de bord (4b^{III}, 4b^{V}, 4b^{VI}) sont attenants, le ou au moins un flanc (7^{III}, 7^{IV}, 7^{V}) s'étendant à un angle (α) de 0° à 10° par rapport à la direction radiale, et la saillie (11) et le creux (11') ne dépassant pas dans la zone radialement à l'extérieur de ce flanc (7^{III}, 7^{IV}).

15. Pneumatique de véhicule selon l'une quelconque des revendications 1 à 14, **caractérisé en ce qu'**une section de base d'entaille (6) s'étend dans la section principale (4a, 4a^{II}, 4a^{V}), à laquelle un flanc (7^{V}) s'étendant vers la section de bord (4b^{V}) est attenant ou à laquelle des flancs (7) s'étendant vers les sections de bord (4b) sont attenants, le ou au moins un flanc (7, 7^{V}) s'étendant à un angle (α) qui est supérieur à 10° et d'au plus 45° par rapport à la direction radiale, et la saillie (11) et le creux (11') dépassant dans la zone radialement à l'extérieur de ce flanc (7, 7^{V}).
